# DEMANDE DE BREVET EUROPEEN

(11) **EP 1 538 725 A1**
(43) Date de publication de la demande: **08.06.2005**
(21) Numéro de dépôt: 04292653.5
(22) Date de dépôt: 09.11.2004
(51) Int. Cl.: H02J 7/00

(54) **Procédé et système de charge d'une batterie dont la pression interne varie en fonction de l'état de charge et de la température**

(30) Priorité: 05.12.2003 FR 0314323
(71) Demandeur: Peugeot Citroen Automobiles S.A., 78140 Vélizy Villacoublay (FR)
(72) Inventeur: Maugy, Christian, 80500 Remaugies (FR); Porcellato, Denis, 92420 Vaucresson (FR); Tarascon, Jean-Marie, 91540 Mennecy (FR); Sainton, Patrick, 94240 l'Hay les Roses (FR)
(74) Mandataire: Domenego, Bertrand

(57) **Abrégé**

Ce procédé de charge d'une batterie comporte une première phase (84) de charge de la batterie avec un courant de charge régulé par rapport à une première consigne de courant prédéterminée tant que la pression interne est inférieure à un seuil prédéterminé, et une phase finale (88) de charge de la batterie avec une tension régulée par rapport à une consigne de tension prédéterminée en laissant varier le courant librement.

La valeur de la première consigne de courant est choisie supérieure à la valeur d'un courant faible de charge permettant de charger la batterie avec le meilleur rendement énergétique possible, et la valeur du seuil prédéterminé est choisie égale à la valeur de la pression interne de la batterie marquant la limite, lors du chargement de la batterie à l'aide du courant faible, entre un premier régime de charge lors duquel la pression interne augmente lentement et un second régime de charge lors duquel la pression interne augmente rapidement.

## Description

L'invention concerne un procédé et un système de charge d'une batterie dont la pression interne varie en fonction de l'état de charge et de la température.

Plus précisément, l'invention concerne un procédé de charge comportant une première phase de charge de la batterie avec un courant de charge régulé par rapport à une première consigne de courant prédéterminée tant que la pression interne est inférieure à un seuil prédéterminé.

Les batteries dont la pression interne varie en fonction de l'état de la charge et de la température sont, par exemple, des batteries Nickel/Métal/Hydrure (NiMH).

Pour ces batteries, il a déjà été proposé de tenir compte, lors de leur chargement, de la valeur de la pression interne. Par exemple, US 6 163 134 divulgue un procédé de charge d'une telle batterie comportant plusieurs phases successives de charge. Le passage d'une phase à la phase suivante est déclenché lorsque la pression interne a atteint un seuil prédéterminé.

Ce procédé de charge est particulièrement lent puisqu'il comporte notamment des phases lors desquelles l'accumulation d'électricité dans la batterie est interrompue ou alors réalisée très lentement.

Ce procédé appartient typiquement à une première famille de procédés connus visant à optimiser le rendement énergétique et faradique du procédé de charge.

Le rendement énergétique est ici mesuré par le rapport entre la puissance délivrée par la batterie chargée sur la puissance utilisée pour charger cette batterie.

Le rendement faradique est ici mesuré par le rapport entre le nombre d'ampères/heure fourni par la batterie lorsqu'elle se décharge sur le nombre d'ampères/heure fourni à la batterie lors de l'accumulation d'électricité dans celle-ci.

De manière à obtenir un rendement énergétique élevé, les procédés de la première famille évitent que l'énergie fournie à la batterie ne soit dissipée sous forme de chaleur. Pour cela, typiquement, la batterie est chargée à l'aide d'un courant constant et faible. Le temps de charge de la batterie avec les procédés de cette première famille est donc long.

Au contraire, des procédés appartenant à une seconde famille visent à minimiser le temps de charge de la batterie. Par exemple, la batterie sera chargée à tension constante en laissant le courant varier librement. Un tel procédé de charge est très rapide mais présente un rendement énergétique et un rendement faradique très inférieurs à celui des procédés de la première famille, ce qui est par conséquent néfaste pour la durée de vie de la batterie.

L'invention vise à remédier aux inconvénients précédents en proposant un procédé de charge qui est rapide tout en conservant un rendement énergétique élevé.

L'invention a donc pour objet un procédé de charge tel que décrit ci-dessus caractérisé en ce que la valeur de la première consigne de courant est choisie supérieure à la valeur d'un courant faible de charge permettant de charger la batterie avec le meilleur rendement énergétique possible, et la valeur du seuil prédéterminé est choisie égale à la valeur de la pression interne de la batterie marquant la limite, lors du chargement de la batterie à l'aide du courant faible, entre un premier régime de charge lors duquel la pression interne augmente lentement et un second régime de charge lors duquel la pression interne augmente rapidement, et en ce qu'il comporte une phase finale de charge de la batterie avec une tension régulée par rapport à une consigne de tension prédéterminée en laissant varier le courant librement, ce qui permet d'optimiser à la fois le temps de charge et le rendement énergétique.

Dans le procédé ci-dessus, l'utilisation pendant la première phase d'un courant régulé dont la valeur est plus élevée que celle du courant faible permet de raccourcir de façon importante le temps de charge de la batterie. Par ailleurs, pendant cette première phase, tant que la pression interne est inférieure au seuil prédéterminé, très peu d'échauffement de la batterie se produit de sorte que quasiment l'ensemble du courant envoyé à la batterie est utilisé pour la charger et non pas pour produire de la chaleur. Le rendement énergétique pendant la première phase est donc élevé.

L'accumulation d'électricité dans une batterie à l'aide d'une tension régulée est connue pour être un moyen très rapide pour charger une batterie. Par contre, cela s'effectue au détriment du rendement énergétique car la valeur du courant qui varie librement peut s'il est très élevé avoir pour conséquence d'être dissipé par effet joule. Toutefois, dans le procédé ci-dessus, l'accumulation d'électricité dans la batterie à l'aide d'une tension régulée n'est déclenchée que lors d'une phase finale à un moment où la batterie est en grande partie déjà chargée. Dans ces conditions, l'accumulation d'électricité à l'aide d'une tension régulée ne provoque pas l'envoi d'un courant de valeur très élevée dans la batterie ce qui minimise l'échauffement de la batterie. Ainsi, cette phase finale constitue un moyen rapide pour achever l'accumulation d'électricité dans la batterie sans pour autant altérer le rendement énergétique.

Ainsi grâce à ces deux phases successives, ce procédé permet d'optimiser à la fois le temps de charge et le rendement énergétique.

Suivant d'autres caractéristiques du procédé conforme à l'invention, celui-ci se caractérise en ce que :
- pour une batterie équipée de deux bornes de connexion électrique entre lesquelles s'établit une tension maximalee lorsque la batterie est chargée, il comporte au moins une phase intermédiaire de charge de la batterie avec un courant régulé par rapport à une deuxième consigne de courant tant que la tension aux bornes de la batterie est inférieure à la tension nominale, cette phase intermédiaire étant exécutée après la première phase et avant la phase finale et, la valeur de cette deuxième consigne étant choisie inférieure à celle de la première consigne et supérieure à la valeur du courant faible ;
- il comporte qu'une seule phase intermédiaire exécutée immédiatement après la première phase et immédiatement avant la phase finale ;
- il comporte une phase d'étalonnage de la batterie pour déterminer la valeur du seuil prédéterminé, cette phase comportant :
   - une étape consistant à charger la batterie à l'aide du courant faible, et
   - une étape de relevé de la pression interne de la batterie lors du passage entre le premier régime de charge et le second régime de charge ;
- la valeur de la consigne de tension régulée est choisie pour que la tension régulée soit égale à la valeur de la tension maximale de la batterie lors de la phase finale ;
- la valeur ou chaque consigne de courant prédéterminée est constante ;

L'invention a également pour objet un système de charge d'une batterie dont la pression interne varie en fonction de l'état de la charge et de la température, ce système comportant :
- un capteur d'une grandeur représentative de la pression interne de la batterie,
- une source d'alimentation commandable, et
- une unité de commande de la source d'alimentation en fonction de la grandeur représentative de la pression interne mesurée par le capteur, caractérisé en ce que :

- la source d'alimentation est apte à générer un courant de charge régulé par rapport à une consigne de courant, et en alternance, une tension de charge régulée par rapport à une consigne de tension,
- l'unité de commande est apte à commander la source d'alimentation de manière à ce que :
   - lors d'une première phase de charge, la source génère un courant régulé par rapport à une première consigne de courant prédéterminée tant que la pression interne mesurée est inférieure à un seuil prédéterminé, la valeur de la première consigne de courant étant choisie supérieure à la valeur d'un courant faible de charge permettant de charger la batterie avec le meilleur rendement énergétique possible, et la valeur du seuil prédéterminé étant choisie égale à la valeur de la pression interne de la batterie marquant la limite, lors du chargement de la batterie à l'aide du courant faible, entre un premier régime de charge lors duquel la pression interne augmente lentement et un second régime de charge lors duquel la pression interne augmente rapidement, et
   - lors d'une phase finale de charge, la source génère une tension régulée par rapport à une consigne de tension prédéterminée en laissant varier le courant librement ce qui permet d'optimiser à la fois le temps de charge et le rendement énergétique.

Suivant d'autres caractéristiques du système conforme à l'invention, celui-ci se caractérise en ce que :
- pour charger une batterie équipée de deux bornes de connexion électrique entre lesquelles s'établit une tension maximale lorsque la batterie est chargée, il comporte un voltmètre pour relever la tension aux bornes de la batterie, et l'unité de commande est également apte à commander la source d'alimentation pour que lors d'une phase intermédiaire exécutée après la première phase et avant la phase finale, la source d'alimentation génère un courant régulé par rapport à une seconde consigne de courant prédéterminée tant que la tension aux bornes de la batterie est inférieure à la tension maximale, la valeur de la seconde consigne de courant étant choisie inférieure à celle de la première consigne de courant et supérieure à la valeur du courant faible ;
- le capteur comporte au moins une jauge de contrainte disposée sur la surface extérieure d'une enveloppe de la batterie et électriquement raccordée pour former un quart, un demi ou un pont complet de WHEATSTON.

L'invention sera mieux comprise à la lecture de la description qui va suivre donnée uniquement à titre d'exemple et faite en se référant aux dessins sur lesquels :
- la figure 1 est une illustration schématique de l'architecture d'un système de charge d'une batterie conforme à l'invention, et
- la figure 2 est un organigramme d'un procédé de charge d'une batterie conforme à l'invention.

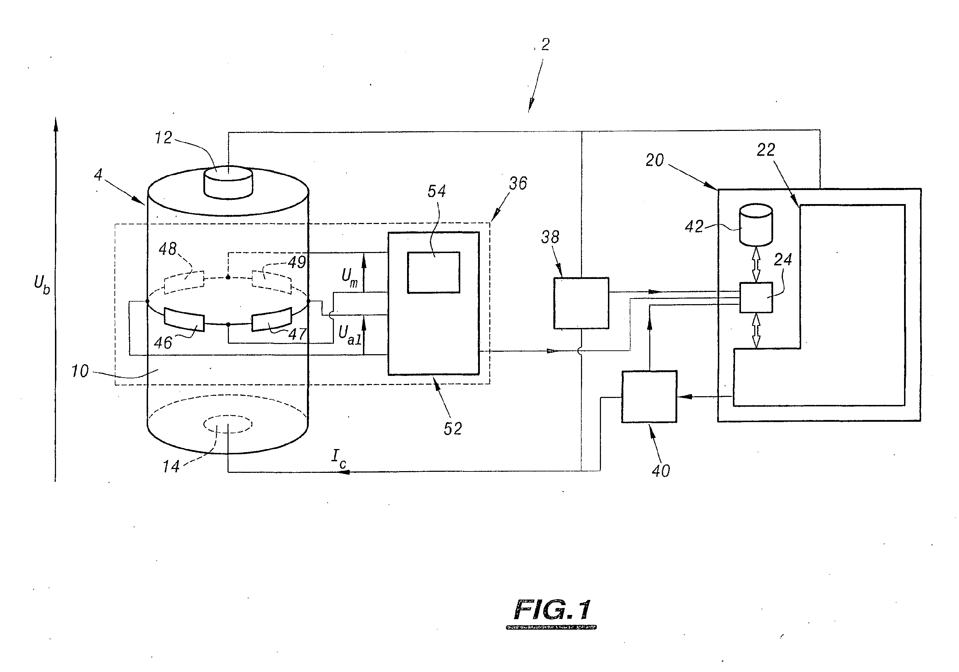

La figure 1 représente un système, désigné par la référence générale 2, de charge d'une batterie 4.

La batterie 4 est ici une batterie dont la pression peut varier telle qu'une batterie Nickel Métal Hydrure. Cette batterie présente ici une enveloppe extérieure cylindrique verticale 10.

La batterie 4 comporte une borne positive 12 et une borne négative 14 disposées respectivement à l'extrémité supérieure et à l'extrémité inférieure de l'enveloppe 10.

Ici, à titre d'exemple, la tension maximale V_{N} de cette batterie 4 est égale à 1,55 volts et la capacité nominale C_{N} est égale à 6,5 ampères/heure.

Ce type de batterie étant connu, la structure de la batterie 4 ne sera pas décrite ici plus en détail.

On rappellera simplement que lors du fonctionnement d'une telle batterie, la pression Pᵢ à l'intérieur de l'enveloppe 10 varie en outre, en fonction de l'état de charge de la batterie 4 et de la température. Cette pression est appelée "pression interne" dans la suite de la description.

Le système 2 comporte un banc 20 de charge de la batterie 4 raccordé en parallèle entre les bornes 12 et 14.

Ce banc 20 comporte une source d'alimentation commandable 22 associée à une unité 24 de commande de la source 22.

La source 22 est apte à générer un courant continu régulé par rapport à une consigne de courant et une tension continue régulée par rapport à une consigne de tension. Plus précisément, ici, trois consignes de courant prédéterminées sont disponibles correspondant respectivement à un courant de charge de trois ampères, de dix ampères et de trente ampères. La consigne de tension est ici choisie de manière à ce que la tension régulée générée par la source 22 soit égale à la tension maximale, c'est-à-dire à 1,55 volts. Ce choix de la consigne de tension permet de recharger la batterie 4 extrêmement rapidement. On notera également que lorsque le courant de charge est régulé, la tension varie librement et inversement.

Les consignes prédéterminées étant ici constantes, le courant ou la tension régulée correspondant est donc aussi constant.

La valeur de trois ampères correspond à un courant faible permettant de charger très lentement la batterie 4 sans aucune dissipation d'énergie par échauffement de la batterie. L'accumulation d'électricité dans la batterie 4 avec ce courant faible constant permet donc d'obtenir le meilleur rendement énergétique possible.

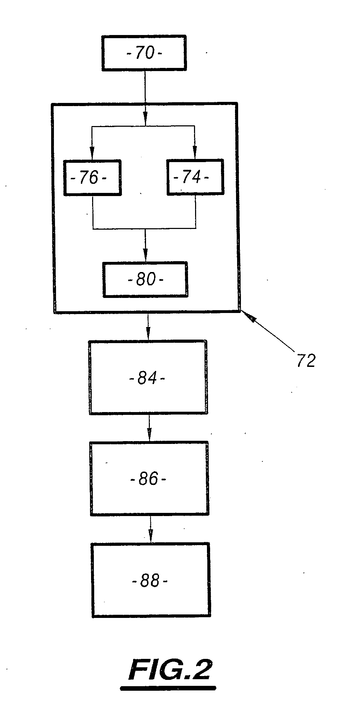

Les valeurs de dix et trente ampères sont des valeurs déterminées expérimentalement pour optimiser le temps de charge et le rendement énergétique du procédé de charge de la figure 2.

L'unité de commande 24 est propre à commander la source 22 en fonction des valeurs de la pression interne Pᵢ, d'une tension U_{b} mesurée entre les bornes 12 et 14, et d'un courant de charge I_{c}, généré par la source 22. Plus précisément, l'unité 24 est capable de sélectionner le mode de fonctionnement de la source 22, c'est-à-dire soit la génération d'un courant régulé soit, la génération d'une tension régulée. De plus, l'unité 24 est également apte à sélectionner la valeur du courant régulé en sélectionnant l'une des consignes de courant prédéterminée.

Le système 2 comporte également un capteur 36 d'une grandeur représentative de la pression interne Pᵢ, un voltmètre 38 et un ampèremètre 40 raccordés à des entrées respectives de l'unité 24.

Le voltmètre 38 est raccordé en parallèle aux bornes de la batterie 4 et l'ampèremètre 40 est raccordé en série entre une borne de sortie de courant de charge de la source 22 et la borne 14.

Ici, l'unité 24 est adaptée pour exécuter le procédé de charge de la figure 2. Pour cela, par exemple, l'unité 24 est réalisée à l'aide d'un calculateur électronique programmable conventionnel associé à une mémoire 42 comportant des instructions pour l'exécution du procédé de la figure 2.

Pour éviter de placer un capteur de pression à l'intérieur de la batterie, ce qui complique sa fabrication en engendrant des problèmes d'étanchéité, le capteur 36 comporte ici quatre jauges 46 à 49 de contrainte fixées sur la surface extérieure de l'enveloppe 10. Ces jauges de contrainte sont destinées à mesurer les déformations de l'enveloppe extérieure provoquées par les variations de la pression interne Pᵢ. Ces jauges 46 à 49 sont placées aux endroits de l'enveloppe 10 où les déformations sont les plus importantes, c'est-à-dire, ici dans le cas d'une enveloppe extérieure cylindrique, à mi-hauteur de ce cylindre. De plus, elles sont régulièrement réparties le long de la périphérie de l'enveloppe 10.

La résistance électrique de chaque jauge de contrainte varie en fonction de l'amplitude de la déformation de l'enveloppe 10. De manière à accroître la sensibilité du capteur, ces jauges 46 à 49 sont montées en pont complet de WHEATSTON. Pour cela, les jauges 46 à 49 sont raccordées en série pour former une boucle électrique fermée raccordée à une unité 52 d'alimentation et de mesure. Cette unité 52 est propre à générer une tension d'alimentation Uₐₗ entre deux points de connexion situés respectivement entre les jauges 46 et 48, et les jauges 47 et 49.

Par ailleurs, l'unité 52 est apte à relever une tension Uₘ présente entre deux points de mesure situés respectivement entre les jauges 48 et 49, et les jauges 46 et 47. Dans un tel montage, la tension Uₘ est proportionnelle aux déformations de l'enveloppe 10 mesurées par les jauges 46 à 49 et représente donc la pression interne Pᵢ.

Au repos, c'est-à-dire lorsque la batterie 4 n'est ni chargée ni utilisée, il se peut que les résistances des différentes jauges 46 à 49 ne soient pas toutes égales, ce qui déséquilibre le pont de WHEATSTON. De manière à compenser ce déséquilibre au repos, l'unité 52 comporte un module 54 d'équilibrage.

Le module 54 d'équilibrage permet de compenser les différences de résistance au repos des jauges 46 à 49 pour se ramener à la situation idéale où toutes ces jauges présentent exactement la même résistance au repos. Ainsi, au repos, la tension Uₘ est nulle.

Le fonctionnement du système 2 va maintenant être décrit en regard du procédé de la figure 2.

Initialement, la batterie 4 est complètement déchargée. Dans cet état, un opérateur procède à une étape 70 d'équilibrage du pont de WHEATSTON à l'aide du module 54 pour que dans cet état, la tension Uₘ mesurée soit nulle. Ensuite, l'opérateur procède à une phase d'étalonnage 72 du système 2.

Lors de cette phase, la batterie 4 est chargée, lors d'une opération 74, à l'aide du courant faible continu et constant de trois ampères.

Simultanément, la valeur de la tension Uₘ est relevée en continu, lors d'une opération 76.

Typiquement, pendant cette phase 72, la tension Uₘ relevée décrit au cours du temps une courbe de forme exponentielle. Au début un premier régime de charge s'établit. Dans ce premier régime, la pression interne et la température augmentent très faiblement jusqu'à ce que la batterie 4 soit presque complètement chargée. Ensuite, un second régime de charge s'établit. Dans ce second régime, l'énergie fournie à la batterie 4 est principalement dissipée sous forme de chaleur, ce qui produit une augmentation rapide de la température à l'intérieur de la batterie 4 et donc de la pression interne Pᵢ et de la tension Uₘ.

La valeur de la tension Uₘ au moment du changement de régime de charge est relevée lors de l'opération 76.

La phase d'étalonnage 72 s'achève par une opération 80 lors de laquelle la valeur de la tension Uₘ relevée au moment du changement de régime de charge est enregistrée dans la mémoire 42. Cette valeur sera par la suite appelée seuil S₁. A titre d'exemple, la valeur du seuil S₁ est ici comprise entre 15 et 30 mV, et plus précisément égale à 25 mV.

Une fois le système 2 étalonné, celui-ci peut être utilisé pour charger rapidement la batterie 4.

Lorsque la batterie 4 est de nouveau déchargée, l'unité de commande 24 procède à une phase initiale 84 de charge de la batterie à l'aide du courant régulé de trente ampères. Cette phase initiale est maintenue tant que la valeur de la tension Uₘ mesurée par le capteur 36 reste inférieure au seuil S₁.

Ce courant de trente ampères permet de charger très rapidement la batterie 4 puisque celui-ci est dix fois plus élevé que le courant faible utilisé lors de la phase d'étalonnage. De plus, tant que la valeur de la tension Uₘ reste inférieure au seuil S₁, la quasi-totalité du courant délivré à la batterie 4 est utilisé pour la charger et ne provoque quasiment aucune dissipation de chaleur. Ainsi, bien que la batterie 4 soit chargée très rapidement lors de cette phase initiale, le rendement énergétique reste très élevé.

Dès que la valeur de tension Uₘ atteint le seuil S₁, l'unité 24 de commande 24 procède à une phase intermédiaire 86 de charge. Lors de cette phase 86, la source 22 est commandée pour que la batterie 4 soit chargée à l'aide du courant régulé de dix ampères tant que la tension U_{b} mesurée par le voltmètre 38 reste inférieure à la tension maximale Vₙ.

Cette phase intermédiaire 86 permet de compléter la charge de la batterie 4 aussi rapidement que possible tout en conservant un rendement énergétique élevé. En effet, l'utilisation d'un courant de dix ampères inférieur à celui utilisé lors de la phase initiale 24 permet de limiter l'augmentation de température à l'intérieur de la batterie 4. Par ailleurs, comme ce courant de dix ampères est plus de trois fois supérieur à celui de trois ampères utilisé lors de la phase d'étalonnage, la charge de la batterie reste rapide.

Dès que la tension U_{b} atteint la valeur de la tension maximale Vₙ, l'unité 24 déclenche une phase finale 88 de charge de la batterie 4. Lors de cette phase finale, l'unité 24 commande la source d'alimentation 22 pour charger la batterie 4 à l'aide de la tension régulée.

Lors de cette phase finale, seule la tension est régulée et le courant varie librement.

Étant donné qu'au moment où la phase finale est déclenchée, la batterie 4 est en grande partie déjà chargée, le passage à la phase finale 88 ne provoque pas un appel important de courant dans la batterie 4. Dès lors, l'élévation de température à l'intérieur de la batterie 4 reste modérée. Ainsi, on comprend que la phase intermédiaire 86 a également pour but de charger la batterie 4 à un niveau suffisant pour éviter un appel de courant important au début de la phase 88 tout en évitant l'importante augmentation de température interne qu'aurait causée la prolongation de la phase 84 au delà du seuil de pression interne S₁.

La phase 88 s'achève lorsque la batterie 4 est complètement chargée ce qui peut être détecté à l'aide de l'ampèremètre 40.

Le procédé ci-dessus permet de charger la batterie 4 en environ 23 minutes avec un rendement énergétique égal à 0,862 et un rendement faradique égal à 1.

A titre de comparaison, lorsque cette même batterie est chargée uniquement à l'aide du courant faible de trois ampères, le temps de charge est égal à 130 minutes, le rendement énergétique est égal à 0,886 et le rendement faradique est égal à 1.

Ainsi, le procédé de la figure 2 permet de diviser par plus de cinq le temps de charge, sans modifier le rendement faradique et en diminuant très légèrement le rendement énergétique.

Toujours à titre de comparaison, lorsque la batterie 4 est chargée uniquement avec une tension régulée à la tension maximale Vₙ en laissant varier librement le courant, le temps de charge est de 19 minutes tandis que le rendement énergétique est de 0.75 et le rendement faradique est de 0.94.

Ainsi, on constate que le procédé de la figure 2 représente un bon compromis entre le temps de charge et le rendement énergétique.

Il a également été constaté que puisque le procédé de la figure 2 limite l'augmentation de la température de la batterie 4, la durée de vie de celle-ci est rallongée. En effet, l'augmentation de température déclenche des réactions secondaires, telles que la décomposition de l'électrolyte qui réduisent au fur et à mesure les performances de la batterie 4.

Les valeurs de trente ampères et de dix ampères ont été déterminées expérimentalement de manière à obtenir le meilleur compromis possible entre le temps de charge et la conservation d'un bon rendement énergétique. A cet effet, de nombreuses valeurs ont été essayées avec la même batterie 4. Ces valeurs, dépendent donc de la batterie à charger.

Le système 2 a été décrit dans le cas particulier d'une batterie Nickel Métal Hydrure. Toutefois, en variante, l'enseignement décrit ci-dessus s'applique à d'autres batteries telles que des batteries lithium ou encore des batteries avec d'autres couples électrochimiques telles que par exemple, le plomb, le nickel cadium, etc..

Pour augmenter la sensibilité du capteur 36, les jauges 46 à 49 ont été décrites comme étant montées en pont de WHEATSTON. Toutefois, en variante, on pourra utiliser un nombre inférieur de jauges, celles-ci étant alors montées soit en quart de pont, soit en demi-pont.

Le courant faible de trois ampères est uniquement utilisé lors de la phase d'étalonnage de la batterie 4. Par conséquent, une fois que la batterie 4 a été étalonnée, et que la valeur du seuil S₁ a été déterminée et enregistrée dans le banc de charge 20, celui-ci peut être simplifié en remplaçant la source 22 par une source d'alimentation uniquement apte à délivrer sous la commande de l'unité 24, un courant continu et constant de dix ou de trente ampères et une tension continue et constante égale à la tension maximale de la batterie.

## Revendications

1. Procédé de charge d'une batterie dont la pression interne varie en fonction de l'état de charge et de la température, ce procédé comportant une première phase (84) de charge de la batterie avec un courant de charge régulé par rapport à une première consigne de courant prédéterminée tant que la pression interne est inférieure à un seuil prédéterminé,
**caractérisé en ce que** la valeur de la première consigne de courant est choisie supérieure à la valeur d'un courant faible de charge permettant de charger la batterie avec le meilleur rendement énergétique possible, et la valeur du seuil prédéterminé est choisie égale à la valeur de la pression interne de la batterie marquant la limite, lors du chargement de la batterie à l'aide du courant faible, entre un premier régime de charge lors duquel la pression interne augmente lentement et un second régime de charge lors duquel la pression interne augmente rapidement, et **en ce qu'**il comporte une phase finale (88) de charge de la batterie avec une tension régulée par rapport à une consigne de tension prédéterminée en laissant varier le courant librement, ce qui permet d'optimiser à la fois le temps de charge et le rendement énergétique.

2. Procédé selon la revendication 1 pour une batterie équipée de deux bornes de connexion électrique entre lesquelles s'établit une tension maximale lorsque la batterie est chargée, **caractérisé en ce qu'**il comporte au moins une phase intermédiaire (86) de charge de la batterie avec un courant régulé par rapport à une deuxième consigne de courant tant que la tension aux bornes de la batterie est inférieure à la tension maximale, cette phase intermédiaire (86) étant exécutée après la première phase et avant la phase finale et, la valeur de cette deuxième consigne étant choisie inférieure à celle de la première consigne et supérieure à la valeur du courant faible.

3. Procédé selon la revendication 2, **caractérisé en ce qu'**il comporte qu'une seule phase intermédiaire (86) exécutée immédiatement après la première phase (84) et immédiatement avant la phase finale (88).

4. Procédé selon l'une quelconque des revendications précédentes, **caractérisé en ce qu'**il comporte une phase d'étalonnage (72) de la batterie pour déterminer la valeur du seuil prédéterminé, cette phase comportant :
- une étape (74) consistant à charger la batterie à l'aide du courant faible, et
- une étape (76) de relevé de la pression interne de la batterie lors du passage entre le premier régime de charge et le second régime de charge.

5. Procédé selon l'une quelconque des revendications précédentes, **caractérisé en ce que** la valeur de la consigne de tension régulée est choisie pour que la tension régulée soit égale à la valeur de la tension maximale de la batterie lors de la phase finale.

6. Procédé selon l'une quelconque des revendications précédentes, **caractérisé en ce que** la valeur ou chaque consigne de courant prédéterminée est constante.

7. Système de charge d'une batterie dont la pression interne varie en fonction de l'état de la charge et de la température, ce système comportant :
- un capteur (36) d'une grandeur représentative de la pression interne de la batterie,
- une source (22) d'alimentation commandable, et
- une unité (24) de commande de la source d'alimentation en fonction de la grandeur représentative de la pression interne mesurée par le capteur,
**caractérisé :**
- **en ce que** la source d'alimentation (22) est apte à générer un courant de charge régulé par rapport à une consigne de courant, et en alternance, une tension de charge régulée par rapport à une consigne de tension,
- **en ce que** l'unité de commande (24) est apte à commander la source d'alimentation de manière à ce que :
- lors d'une première phase de charge, la source (22) génère un courant régulé par rapport à une première consigne de courant prédéterminée tant que la pression interne mesurée est inférieure à un seuil prédéterminé, la valeur de la première consigne de courant étant choisie supérieure à la valeur d'un courant faible de charge permettant de charger la batterie avec le meilleur rendement énergétique possible, et la valeur du seuil prédéterminé étant choisie égale à la valeur de la pression interne de la batterie marquant la limite, lors du chargement de la batterie à l'aide du courant faible, entre un premier régime de charge lors duquel la pression interne augmente lentement et un second régime de charge lors duquel la pression interne augmente rapidement, et
- lors d'une phase finale de charge, la source génère une tension régulée par rapport à une consigne de tension prédéterminée en laissant varier le courant librement ce qui permet d'optimiser à la fois le temps de charge et le rendement énergétique.

8. Système selon la revendication 7 pour charger une batterie équipée de deux bornes de connexion électrique entre lesquelles s'établit une tension maximale lorsque la batterie est chargée, **caractérisé en ce qu'**il comporte un voltmètre (38) pour relever la tension aux bornes de la batterie, et **en ce que** l'unité de commande (24) est également apte à commander la source d'alimentation (22) pour que lors d'une phase intermédiaire exécutée après la première phase et avant la phase finale, la source d'alimentation (22) génère un courant régulé par rapport à une seconde consigne de courant prédéterminée tant que la tension aux bornes de la batterie est inférieure à la tension maximale, la valeur de la seconde consigne de courant étant choisie inférieure à celle de la première consigne de courant et supérieure à la valeur du courant faible.

9. Système selon les revendications 7 ou 8, **caractérisé en ce que** le capteur comporte au moins une jauge de contrainte (46 à 49) disposée sur la surface extérieure d'une enveloppe (10) de la batterie et électriquement raccordées pour former un quart, un demi ou un pont complet de WHEATSTON.
